(19) Europäisches Patentamt
European Patent Office
Office européen des brevets

(11) **EP 0 724 315 B1**

(12) **FASCICULE DE BREVET EUROPEEN**

(45) Date de publication et mention
de la délivrance du brevet:
**26.08.1998 Bulletin 1998/35**

(51) Int Cl.6: **H01S 3/06**, H01S 3/0941

(21) Numéro de dépôt: **96400140.8**

(22) Date de dépôt: **22.01.1996**

(54) **Cavité pour microlaser et son procédé de fabrication**

Mikorlaserkavität und ihr Herstellungsverfahren

Microlaser cavity and its manufacturing method

(84) Etats contractants désignés:
**DE FR GB IT**

(30) Priorité: **24.01.1995 FR 9500766**

(43) Date de publication de la demande:
**31.07.1996 Bulletin 1996/31**

(73) Titulaire: **COMMISSARIAT A L'ENERGIE ATOMIQUE**
**75015 Paris (FR)**

(72) Inventeurs:
• **Thony, Philippe**
  **F-38000 Grenoble (FR)**
• **Molva, Engin**
  **F-38000 Grenoble (FR)**

(74) Mandataire: **Dubois-Chabert, Guy et al**
**c/o BREVATOME**
**25, rue de Ponthieu**
**75008 Paris (FR)**

(56) Documents cités:
EP-A- 0 523 861          US-A- 5 249 189
US-A- 5 268 920

• IEEE JOURNAL OF QUANTUM ELECTRONICS, vol. 28, no. 4, pages 1139-1141, XP000272706 KOZLOVSKY W J ET AL: "EFFICIENT DIODE-LASER-PUMPED 946 NM ND: YAG LASER WITH RESONATOR-ENHANCED PUMP ABSORPTION"
• OPTICS LETTERS, vol. 17, no. 17, pages 1201-1203, XP000293919 ZAYHOWSKI J J ET AL: "DIODE-PUMPED MICROCHIP LASERS ELECTRO-OPTICALLY Q SWITCHED AT HIGH PULSE REPETITION RATES"

**Description**

Domaine technique

Le présent brevet concerne le domaine des microlasers solides à pompage optique; Le microlaser est un laser dont le milieu amplificateur est un solide. Le solide qui constitue l'amplificateur de la cavité laser est excité par une source lumineuse (pompage optique). Il peut être cristallin (cristal oxyde dopé, cristal semi-conducteur, ...) ou amorphe (verre). Les photons de pompage sont absorbés par les centres actifs laser, qui peuvent être introduits dans le solide par dopage sous forme d'impuretés, ou bien qui sont des constituants même du solide. Dans le microlaser en général, le milieu laser est pompé longitudinalement, c'est-à-dire que la source de pompage est située sur l'axe du laser et que l'axe du faisceau de pompe est le même que l'axe du faisceau laser.

Le microlaser est constitué d'un seul bloc de petite dimension : le volume occupé est de l'ordre du mm$^3$ ou moins. Cette petite taille lui permet de s'intégrer comme source lumineuse cohérente dans de très nombreux systèmes. Tous les composants du microlaser sont assemblés de diverses manières pour ne former qu'un seul élément monolithique. Du fait de cette structure monolithique, le microlaser est une source de petite taille, robuste et indéréglable. Il est donc d'une grande fiabilité.

Une caractéristique importante du microlaser est son coût de fabrication faible. Le microlaser en lui-même est une source peu chère car il peut être produit facilement de façon collective. En fait, le microlaser est un ensemble de couches de nature et d'épaisseur différente, empilées selon différentes techniques les unes sur les autres. Le milieu amplificateur peut constituer le substrat. En utilisant des techniques de fabrication planaire, des plaques peu épaisses de grande dimension peuvent être traitées puis découpées en un très grand nombre d'unités. Ainsi, des plaques de quelques centaines de microns et de plusieurs pouces de diamètre donnent quelques milliers de laser. A partir d'un seul lingot de milieu amplificateur, plusieurs dizaines de milliers de microlasers peuvent être obtenus. Cette fabrication de masse entraîne un coût très faible, caractéristique du microlaser. Il faut ensuite ajouter à ce coût celui de la source de pompage.

Etat de la technique

On connaît des microlasers utilisant une cavité résonnante à deux miroirs plans, qui sont les deux faces terminales polies du microlaser. Le problème de cette structure est que la cavité à deux miroirs plans est géométriquement instable. Une stabilisation apparaît, mais qui est due aux effets de la variation de l'indice du matériau avec la température, et aux effets de la variation de l'indice avec la pression, qui augmente elle-même avec la température, aux effets dus au gain dans le matériau. Tous ces effets ont lieu le long de l'axe du faisceau de pompage. Les deux premiers effets sont liés à l'échauffement du matériau laser et peuvent donner lieu à la formation d'un guide optique par l'élévation locale de l'indice du matériau. Le troisième, prépondérant dans les lasers à semiconducteurs, peut suffire à guider le faisceau de pompage. Un des problèmes de tous ces effets est qu'ils sont difficilement contrôlables.

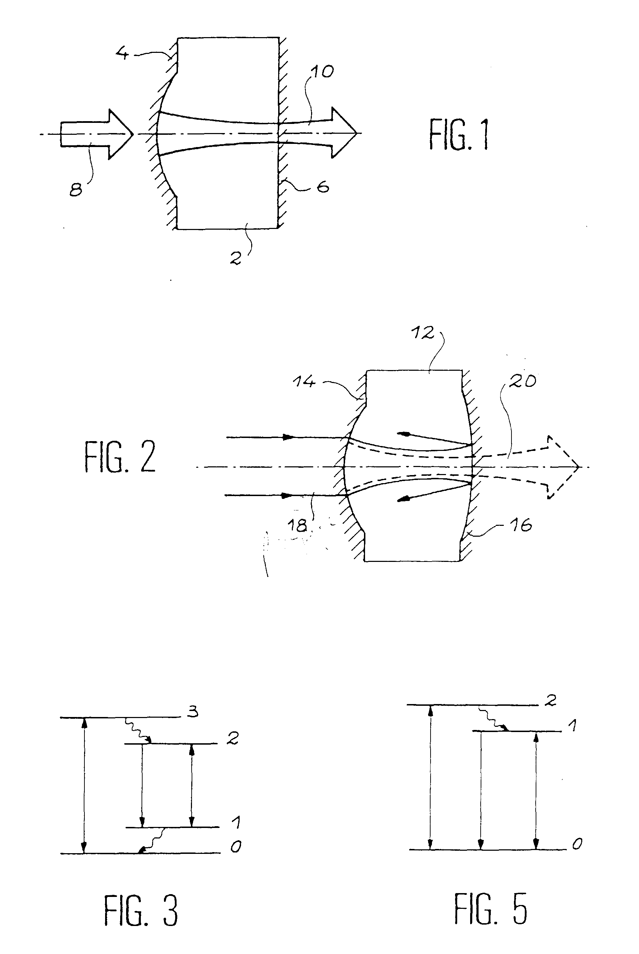

Il est également possible de former une cavité stable en réalisant sur le microlaser soit en entrée, soit en sortie une face convexe, ainsi qu'illustré sur la figure 1. Sur cette figure, la référence 2 désigne le milieu actif du microlaser, la référence 6 un miroir de sortie, la référence 4 un miroir concave d'entrée. Les miroirs sont obtenus par dépôt diélectrique sur les faces polies du matériau laser. Un faisceau de pompage 8 pénètre dans le milieu laser par son côté présentant une face convexe et un faisceau laser 10 est extrait du milieu laser par la face plane. La face convexe peut être obtenue par une technique de polissage qui est difficile à maîtriser dans le cadre d'une fabrication collective du microlaser, ou par une technique de gravure qui peut être réalisée plus facilement avec des procédés de fabrication de masse. Les seuils de fonctionnement laser mesurés avec ces cavités hémisphériques sont plus faibles que dans le cas des microlasers à cavité plan-plan. Les cavités hémisphériques permettent de réaliser des microlasers continus fonctionnant avec un meilleur rendement de conversion.

Un problème posé par ce type de cavité plan-concave est que cette structure ne permet pas la réalisation de microlasers avec des matériaux peu performants et/ou avec des moyens de pompage de puissance faible. D'une façon générale, les rendements obtenus avec une cavité plan-concave sont encore trop limités.

Exposé de l'invention

La présente invention a pour objet de proposer une structure de cavité pour un microlaser, qui permet d'augmenter le rendement de fonctionnement du microlaser et, en particulier, de permettre de fabriquer des microlasers avec des matériaux peu performants et/ou avec des moyens de pompage de puissance faible. En outre, cette structure doit être compatible avec les procédés de fabrication en grande série, donc à faible coût, des microlasers connus.

Ainsi, l'invention a pour objet une cavité microlaser comportant un milieu actif laser et des moyens de réflexion en entrée et en sortie de cavité, caractérisée en ce que les moyens de réflexion sont dimensionnés de façon à ce que, dans le milieu actif, la taille d'un faisceau de pompage soit au plus égale à la taille du faisceau laser.

Ainsi, on dispose d'une structure qui permet de modeler les faisceaux de pompage et laser indépendamment des effets thermiques, qui permet de stabiliser la cavité et qui permet d'optimiser le rendement de fonctionnement du microlaser du point de vue de l'absorption du faisceau de pompage dans le volume utile du faisceau laser, dans le milieu amplificateur. On accroît ainsi l'efficacité d'extraction qui est liée au recouvrement du faisceau de pompage et du faisceau laser.

Afin d'augmenter l'efficacité d'absorption du faisceau de pompage et, donc, d'améliorer encore le rendement du dispositif, les moyens de réflexion en sortie peuvent être traités de façon à avoir un coefficient de réflexion maximum à la longueur d'onde du faisceau de pompage et les moyens de réflexion en entrée peuvent être traités de façon à avoir un coefficient de transmission maximum à la longueur d'onde du faisceau de pompage et un coefficient de réflexion maximum à la longueur d'onde du faisceau laser. Ainsi, la quantité de lumière totale absorbée est encore accrue.

Selon un mode particulier de réalisation de l'invention, les moyens de réflexion sont des miroirs sphériques (dont les rayons de courbure sont calculés de façon à ce que la taille du faisceau de pompage soit au plus égale à la taille du faisceau laser dans le milieu actif).

Un autre sous-problème, résolu dans le cadre de la présente invention, est que les composants optiques de type miroir sphérique ont des caractéristiques focales qui ne dépendent que des rayons de courbure. Il peut être intéressant, dans certains cas, de pouvoir faire varier la distance focale des moyens de réflexion en fonction de la longueur d'onde. Ce problème est résolu en utilisant, comme moyen de réflexion, des miroirs diffractifs de type Fresnel ou des miroirs holographiques.

Un problème supplémentaire peut être de réaliser une cavité en mode déclenché, actif ou passif.

Ainsi, afin de réaliser une cavité telle que décrite ci-dessus, mais fonctionnement en mode déclenché actif, cette cavité peut intégrer en outre un déclencheur électro-optique. De tels déclencheurs sont déjà connus en liaison avec des microlasers. Mais ils fonctionnent avec une tension de fonctionnement élevée (de l'ordre de 1000 volts). Lorsqu'ils sont utilisés dans un microlaser selon la présente invention, la tension de fonctionnement peut être diminuée à environ 100 volts.

Le milieu actif laser peut être du type à quatre niveaux. Il peut également être du type à trois niveaux, les moyens de réflexion de la cavité étant dimensionnés de façon à ce que la taille du faisceau de pompage soit sensiblement égale à la taille du faisceau laser dans le milieu actif.

Un des avantages de l'invention est de permettre la réalisation de microlasers avec un milieu actif de faible épaisseur (≤300µm) selon la direction du faisceau de pompage.

Enfin, l'invention concerne également un microlaser comportant une cavité telle que décrite ci-dessus et des moyens de pompage de cette cavité.

Brève description des figures

De toute façon, les caractéristiques et avantages de l'invention apparaîtront mieux à la lumière de la description qui va suivre. Cette description porte sur les exemples de réalisation, donnés à titre explicatif et non limitatif, en se référant à des dessins annexés sur lesquels :

- la figure 1 représente un microlaser de structure plan-concave, selon l'art antérieur,
- la figure 2 représente une cavité microlaser selon la présente invention,
- la figure 3 représente le principe du fonctionnement d'un laser à quatre niveaux,
- les figures 4A à 4D illustrent le problème du recouvrement des faisceaux dans un laser à quatre niveaux,
- la figure 5 représente le principe de fonctionnement d'un laser à trois niveaux,
- les figures 6A à 6D illustrent le problème de recouvrement des faisceaux dans un laser à trois niveaux,
- la figure 7 illustre le principe de l'optimisation d'un microlaser selon l'invention,
- les figures 8A et 8B représentent respectivement le profil et la propagation d'un faisceau gaussien.

Description détaillée de modes de réalisation de l'invention

Un premier mode de réalisation de l'invention va être décrit en liaison avec la figure 2 sur laquelle la référence 12 désigne le milieu actif du microlaser et les références 14 et 16 ses faces d'entrée et de sortie. Un faisceau de pompage est désigné par la référence 18 et le faisceau laser par la référence 20. Les faces d'entrée 14 et de sortie 16 sont convexes, et des dépôts de couches diélectriques permettent de former des miroirs sphériques sur chacune des faces d'entrée et de sortie. De préférence, les miroirs obtenus sont des miroirs dichroïques, présentant des caractéristiques de réflexion et de transmission différentes aux longueurs d'onde du faisceau de pompage 18 et du faisceau laser 20. Chacun des miroirs d'entrée et de sortie présente un rayon de courbure qui est à déterminer de façon à ce que la taille du faisceau de pompage à l'intérieur du matériau actif 12 soit au plus égale à la taille du faisceau laser dans ce même matériau (condition dite de recouvrement).

La quantité d'énergie de pompe absorbée, qui est l'un des facteurs du rendement de conversion du microlaser, est le résultat de plusieurs effets : les propriétés d'absorption du matériau laser et la longueur de matériau parcourue par le faisceau de pompe. La quantité d'énergie de pompe absorbée est proportionnelle à exp(-$\alpha$.l) où $\alpha$ est le coefficient d'absorption du matériau laser et l la longueur de matériau parcourue.

Pour un matériau fixé, plus la longueur l est grande, meilleure sera l'efficacité d'absorption. Toutefois, une longueur très grande est inutile car, à partir d'un certain point, l'augmentation de la longueur donne une augmentation de l'absorption négligeable (l'énergie est déjà presque totalement absorbée).

Le rôle du recouvrement du mode laser et du faisceau de pompe n'a pas la même importance en fonction du type de laser : trois niveaux ou quatre niveaux, ou même systèmes lasers intermédiaires.

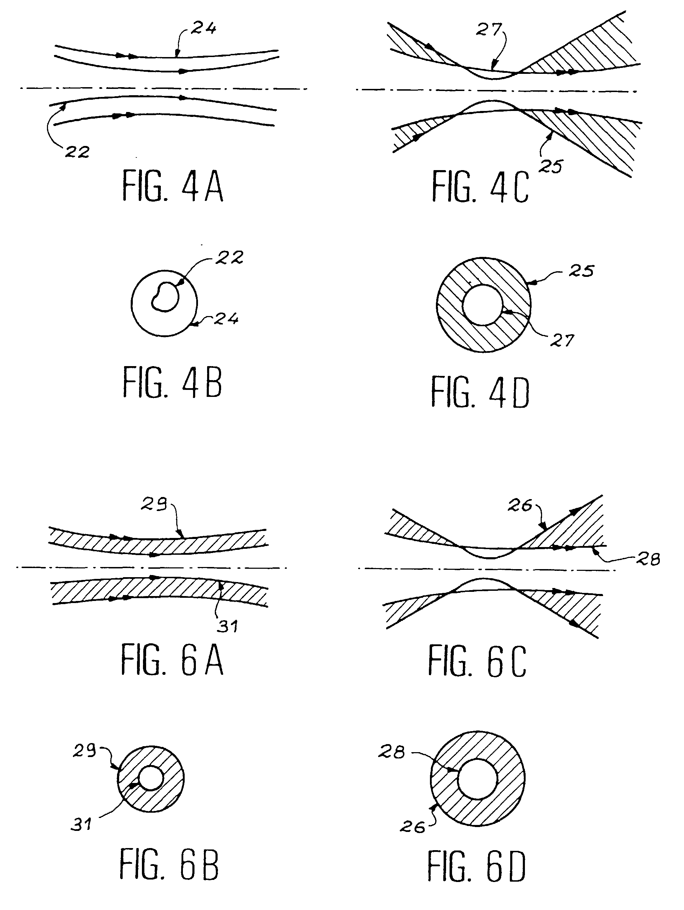

Certains matériaux mettent en jeu quatre niveaux d'énergie spectroscopiques dans leur principe de fonctionnement laser, comme illustré sur la figure 4 ; un niveau fondamental 0 et trois niveaux excités 1, 2, 3. Les photons de pompe sont absorbés entre le niveau fondamental et le plus haut niveau excité (n° 3) . Les centres actifs excités sur ce niveau se désexcitent sur le niveau immédiatement inférieur (n°2). C'est entre ce niveau et le niveau au-dessus du niveau fondamental (n°1) que l'effet laser a lieu, grâce aux désexcitations radiatives des centres actifs par émission stimulée. Les deux niveaux considérés pour le phénomène d'absorption (0 et 3) et les deux niveaux considérés pour le phénomène d'émission stimulée (1 et 2) sont donc indépendants. L'absorption de la pompe et l'émission laser n'interagissent pas.

Comme illustré sur les figures 4A et 4B, lorsque le faisceau de pompe 22 est entièrement inclus dans le mode laser 24 ("bon" recouvrement), toute l'énergie de pompe est absorbée dans le volume utile du laser. Cette énergie participe effectivement à l'effet laser, dès qu'elle est absorbée à l'intérieur du faisceau laser, de quelque façon que ce soit à partir du moment où on peut négliger les effets thermiques parasites dus à l'échauffement par le faisceau de pompe et les effets de guidage par le gain. Une situation de mauvais recouvrement des faisceaux est illustrée sur les figures 4C et 4D, où la taille du faisceau de pompage 25 est supérieure à celle du faisceau laser 27. Les partie hachurées sur ces figures représentent de l'énergie de pompage perdue.

Certains matériaux mettent en jeu trois niveaux d'énergie pour leur fonctionnement laser, comme illustré sur la figure 5. Les centres actifs sont excités par l'absorption de la pompe dans le niveau excité le plus haut (n°2). Puis il se relaxent sur le niveau immédiatement inférieur (n°1). C'est entre ce dernier niveau et le niveau fondamental 0 que l'effet laser a lieu grâce à l'émission stimulée d'un photon lorsque les centres actifs se désexcitent; ceci signifie aussi que le matériau laser absorbe les photons entre le niveau fondamental et le niveau laser supérieur (n°1), donc qu'il réabsorbe les photons laser, ce qui crée des pertes supplémentaires. D'autre part, pour obtenir de l'émission stimulée, il faut que le niveau laser supérieur (n°1) soit plus peuplé que le niveau d'arrivée. Ceci veut dire que le niveau fondamental est dépeuplé. L'absorption de la pompe s'en trouve réduite.

En résumé, par rapport au fonctionnement du laser à quatre niveau, deux phénomènes pénalisants interviennent : la réabsorption des photons émis, qui entraîne des pertes supérieures dans la cavité laser, et la saturation de l'absorption de la pompe, qui entraîne une diminution de l'efficacité d'absorption de la lumière de pompage. Comme on le voit sur les figures 6C et 6D, si le recouvrement des faisceaux est tel que le faisceau de pompe 26 n'est pas entièrement dans le mode laser 28, l'énergie absorbée en dehors du mode laser est inutile. Elle ne participe pas à l'établissement du gain sur le passage du faisceau laser et ceci est d'autant plus pénalisant qu'il existe des pertes importantes dues à la réabsorption du matériau laser. Mais si, comme illustré sur les figures 6A et 6B, le faisceau de pompage 27 est complètement dans le mode laser 29 et de taille bien inférieure à celle du mode laser, deux facteurs néfastes sont à considérer : les zones du mode laser où il n'y a pas de pompe absorbée sont des zones de pertes supplémentaires ; il faut aussi faire attention à la saturation de l'absorption de la pompe. Un système purement à trois niveaux est donc délicat, car il ne suffit pas d'absorber la pompe n'importe où dans le mode laser. Il faut en outre que la taille du faisceau de pompage soit égale ou à peu près égale à la taille du faisceau laser.

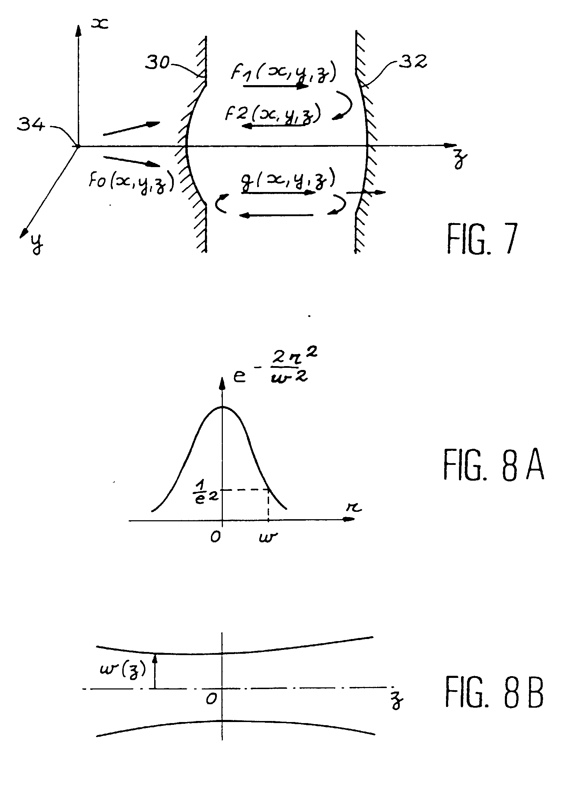

Un schéma général de calcul de microlaser à efficacité optimisée conforme à l'invention va être donné, en liaison avec la figure 7. Cette figure représente le cas particulier d'un microlaser à deux miroirs sphériques 30, 32 éclairés par une source de pompage 34, mais le calcul est applicable pour des moyens de réflexion autres (tels que miroirs de Fresnel ou holographiques, ainsi qu'expliqué plus loin).

La source de pompage émet une onde lumineuse dont l'amplitude est représentée par $f_0(x,y,z)$. Cette onde est transformée par le passage au travers de la face d'entrée, son amplitude devenant alors $f_1(x,y,z)$. Après propagation dans le microlaser d'indice n, l'onde est réfléchie par la face de sortie et l'amplitude de l'onde de pompage devient $f_2(x,y,z)$. Dans la cavité laser résonnante, une onde lumineuse cohérente oscille entre les deux miroirs 30, 32. Son amplitude vaut $g(x,y,z)$.

Dans le milieu à gain du microlaser, on peut déterminer l'amplitude et la phase des deux ondes (la pompe et le laser). Le calcul fait intervenir une première intégrale de recouvrement simple. Cette intégrale de recouvrement R entre les deux ondes s'écrit comme la somme du produit des deux ondes en présence dans le microlaser, c'est-à-dire l'onde laser $g(x,y,z)$, l'onde pompe à l'aller $f_1(x,y,z)$ et l'onde pompe au retour $f_2(x, y,z)$ :

$$R = \int g(\overline{x}, y, z)(f_1(x, y, z) + f_2(x, y, z))dxdydz$$

Les autres ondes de pompage, après une troisième réflexion, puis des réflexions d'ordre supérieur ne sont pas prises en compte car il y a absorption à peu près complète sur un aller-retour du faisceau de pompage.

Le calcul de la propagation des amplitudes du faisceau de pompe et le calcul du faisceau laser oscillant dans la microcavité peuvent se faire en appliquant différentes théories. Les méthodes de résolution peuvent être issues par exemple des équations de l'électromagnétisme, de la diffraction ou de la propagation des faisceaux gaussiens.

La suite donne une méthode pour calculer les caractéristiques de la cavité microlaser faisant appel à la propagation des faisceaux gaussiens. Un faisceau gaussien est une caractéristique d'un laser à un seul mode transverse. Le profil et la propagation d'un tel faisceau sont représentés respectivement sur les figures 8A et 8B. Un faisceau gaussien est caractérisé par sa longueur d'onde $\lambda$, par la position d du col ("waist" en anglais) du faisceau sur son axe Oz et par le rayon w du faisceau, qui est donné le long de l'axe de propagation Oz par la formule :

$$Z(z) = \pi w(z)^2 / \lambda \qquad Z(z) = Z_0(1 + (z/Z_0)^2)$$

Une fonction $Z_i$ représentant le diamètre le long de l'axe de propagation pour chacun des trois faisceaux supposés coaxiaux, est donnée par :

- faisceau laser : $Z_l(z)$,
- faisceau de pompe sur son trajet aller : $Z_a(z)$,
- faisceau de pompe sur son trajet retour : $Z_r(z)$.

Ces trois fonctions sont donc des polynômes du second degré sur la coordonnée d'axe z. Les coefficients de ces polynômes sont réels et sont déterminés par les caractéristiques géométriques de la cavité microlaser et du faisceau de pompage. Pour les obtenir, on utilise la méthode de calcul bien connue de propagation des faisceaux gaussiens, dite méthode des matrices ABCD (exposée par exemple dans l'ouvrage de Anaviev, "Résonateurs optiques et problèmes de divergence du rayonnement laser", Editions Mir, Moscou, 1982). On constate alors que :

- $Z_l(z)$ dépend des distances focales des micromiroirs à la longueur d'onde laser ($f_1$ et $f_2$) et de l'épaisseur du microlaser (e),
- $Z_a(z)$ dépend des caractéristiques du faisceau de pompage incident (dimensions et position de la source de pompage), de la distance focale du composant d'entrée pour la pompe ($f'_1$),
- $Z_r(z)$ dépend des caractéristiques du faisceau de pompage incident, de la distance focale du composant d'entrée pour la pompe ($f'_1$), de l'épaisseur du microlaser (e), de la distance focale du composant de réflexion de la pompe ($f'_2$).

Les deux polynômes suivants représentent respectivement la différence, en chaque point de l'axe, entre la dimension du faisceau laser et la dimension du faisceau pompe respectivement à l'aller et au retour :

$$P_a(s) = Z_l(z) - Z_a(z) \qquad P_r(z) = Z_l(z) - Z_r(z)$$

Par rapport aux figures 4A-4D et 6A-6D, qui évaluent les positions relatives des faisceaux laser et pompe, on voit que ces deux polynômes représentent justement ces positions. Si ils sont positifs, cela signifie que le faisceau pompe est à l'intérieur du faisceau laser, ce qui suffit en première approximation dans le cas du laser à quatre niveaux d'énergie (figures 3 et 4A-4D). Pour le cas des lasers à trois niveaux (figures 5 et 6A-6D), il faut de plus que la valeur des deux polynômes soit la plus faible possible le long de l'axe. En effet, pour un faisceau laser fixé plus grand que le faisceau de pompe, l'espace entre le faisceau de pompe et le faisceau laser est alors le siège de pertes supplémentaires et, de même, une trop petite taille de faisceau de pompe, donc une grande différence entre les deux faisceaux, risque de saturer l'absorption.

Ces considérations peuvent être interprétées par les critères mathématiques suivants. Soient a et b les positions des micromiroirs (ou, plus généralement, des moyens de réflexion) sur l'axe z des faisceaux :

- critère "4 niveaux" : absorption localisée dans le faisceau laser : pour a<z<b $\quad P_a(z)>0$ et $P_r(z)>0$
- critère "3 niveaux : pour a<z<b $\quad Pa(z)>0$ et $P_r(z)>0$

et :

minimum de pertes supplémentaires et de saturation de l'absorption :

$$\int_{[a,b]} P_a(z)dz \text{ minimum} \qquad \int_{[a,b]} P_r(z)dz \text{ minimum}$$

En utilisant ces critères, on peut remonter au meilleur compromis pour les caractéristiques du microlaser. En général, d'autres considérations imposent certains paramètres. Par exemple, des contraintes liées à l'application envisagées peuvent imposer l'épaisseur du microlaser (si une émission monofréquence est exigée, une valeur maximum est imposée ; dans le cas d'un microlaser à trois niveaux, il existe une longueur optimale qui équilibre le gain et les pertes) ou la position de la source de pompage par rapport au microlaser (si le microlaser est collé à la source de pompage, diode laser nue ou fibre optique). Ainsi, les variables à déterminer sont :

- les distances focales du micromiroir d'entrée (ou, plus généralement, du moyen de réflexion à l'entrée) $f_1$ et $f'_1$
- les distances focales du micromiroir de sortie (ou, plus généralement, des moyens de réflexion en sortie) $f_2$ et $f'_2$
- la dimension de la source de pompage,
- la position de la source de pompage, dans la mesure où la source reste proche du microlaser.

La source de pompage étant déterminée (dimension, position), il reste à remonter aux caractéristiques de fabrication des micromiroirs.

Si on peut résoudre le problème en imposant $f_1=f'_1$ et $f_2=f'_2$ cela signifie que des micromiroirs simples peuvent être utilisés. Alors les variables à déterminer sont le rayon de courbure du micromiroir d'entrée ($R_1$)et le rayon de courbure du micromiroir de sortie ($R_2$). Ces rayons s'obtiennent directement à partir des focales.

Les gammes de valeurs numériques envisagées sont de l'ordre de quelques millimètres pour les rayons de courbures (de 0,5 mm à 5 mm), de quelques dizaines de micromètres pour la dimension de la source (de 5 à 50 μm de rayon), de quelques centaines de micromètres pour les longueurs de cavités (de 300 à 1000μm). La source est considérée collée au microlaser ou focalisée dans celui-ci.

La face d'entrée 14 de la cavité selon l'invention (figure 2) a notamment pour effet de focaliser le faisceau de pompe dans le cristal. La face d'entrée joue donc deux rôles distincts pour le mode laser et pour le faisceau de pompe. Elle est donc avantageusement revêtue par un traitement diélectrique dichroïque (par exemple : coefficient de transmission maximum à la longueur d'onde de la pompe et coefficient de réflexion maximum à la longueur d'onde laser). La face de sortie du microlaser joue également deux rôles respectivement pour le mode laser et la pompe. En plus de constituer le second miroir de la cavité laser, elle réfléchit et refocalise dans le cristal l'énergie du faisceau de pompe qui n'a pas été absorbée après un passage. Elle est donc elle aussi avantageusement revêtue d'un traitement dichroïque (réflexion maximum à la longueur d'onde de pompage, et éventuellement transmission maximum à la longueur d'onde laser).

Utiliser des composants diffractifs à la place de miroirs classiques en entrée et en sortie peut être d'un grand intérêt, car ces composants présentent des caractéristiques optiques qui varient grandement avec la longueur d'onde, c'est-à-dire un chromatisme très important. Par exemple, la distance focale d'une lentille de Fresnel ou d'un miroir holographique varie directement avec la longueur d'onde, alors qu'un miroir habituel garde une distance focale qui ne dépend que du rayon de courbure. Il est donc possible d'obtenir un composant dont non seulement les coefficients de réflexions et de transmissions varient pour le laser et pour la pompe, mais aussi dont les caractéristiques de focalisation varient pour les deux faisceaux.

Ainsi, une lentille de Fresnel est réalisée sur une lame transparente en obtenant une série d'anneaux sombres (transmission nulle) alternés avec des anneaux transparents (transmission maximum) . Le rayon des anneaux successifs est donné par la formule :

$$\text{rayon} = \sqrt{2n.\lambda.f}$$

où n est un entier, $\lambda$ est la longueur d'onde du faisceau incident et f est la focale de la lentille.

On voit donc que le calcul donné ci-dessus est directement applicable, puisqu'une fois déterminées les focales des miroirs on détermine le rayon des anneaux successifs.

La première zone circulaire ainsi définie peut être sombre ou claire. Son rayon est a. On a donc des anneaux qui l'entoure avec une progression en $\sqrt{n}$. La distance focale principale d'une telle lentille est donnée par :

$$f=a^2/2\lambda.$$

On voit bien dans cette formule la forte dépendance de la focale avec la longueur d'onde.

Un miroir de même type (de Fresnel) est obtenu en utilisant des anneaux alternativement réfléchissants et non-réfléchissants (c'est-à-dire à transmission maximum ou bien à absorption maximum, ou encore à diffusion maximum).

Les éléments holographiques sont des composants optiques beaucoup plus évolués. Les distances focales y sont aussi en $1/\lambda$ et on peut donc également déterminer leurs caractéristiques à partir de la valeur des distances focales. Ils sont obtenus par deux moyens, principalement : l'enregistrement expérimental d'une figure d'interférence complexe entre deux faisceaux lumineux cohérents ; la simulation de la figure d'interférence et son écriture par divers moyens sur une lame transparente. Dans les deux cas, on se retrouve avec une plaque comportant un motif très complexe présentant des niveaux de gris variés, c'est-à-dire des valeurs de transmission variées. La taille de motifs est de l'ordre de la longueur d'onde utilisée pour l'enregistrement ou le calcul de simulation. Ces hologrammes sont dit hologrammes d'amplitude. en général, ces hologrammes ont une transmission globale limitée (à cause des zones noires inhérentes) et ils diffractent plusieurs ordres.

On peut également obtenir des hologrammes de phase. Ils sont transparents car le motif est un motif altérant la phase de l'onde incidente et non plus son énergie. Pour cela, ce n'est plus la transparence de la lame qui est modulée, mais son épaisseur par exemple. Ces hologrammes peuvent ensuite être recouverts d'un dépôt diélectrique comme les miroirs réfractifs.

On peut aussi utiliser des hologrammes dits "de Bragg". L'ordre principal de diffraction concentre le maximum d'énergie lumineuse et est presque le seul "visible", les autres ordres étant très faibles. Ce type d'hologramme présente des conditions d'efficacité maximales.

L'effet d'une cavité laser selon l'invention (remplissant la condition de recouvrement) peut être vue sous l'aspect du bilan énergétique.

Du point de vue énergétique, une source laser est caractérisée par : son seuil de fonctionnement laser qui représente l'énergie ou la puissance minimale de pompe pour obtenir l'effet laser ($P_s$) ; et le rendement différentiel ($\eta$) qui donne l'énergie ou la puissance laser en fonction de l'énergie ou la puissance de pompe au-dessus du seuil. Le rendement global tient compte de la puissance de pompe au seuil qui, elle, dépend des pertes totales de la cavité, des caractéristiques spectroscopiques laser du matériau amplificateur, du volume efficace du faisceau laser et de la valeur du photon de pompe. Le rendement global peut s'exprimer par :

$$P_{laser}/P_{pompe} = \eta - P_s/P_{pompe}$$

Le rendement global maximum que l'on peut atteindre est donc égal au rendement différentiel. Lorsque l'énergie ou la puissance de pompe deviennent grand par rapport à leur valeur au seuil, on s'approche de cette valeur. Le rendement différentiel $\eta$ d'un laser est le produit de plusieurs facteurs :

$$\eta = (h\nu_l)/(h\nu_p)\eta_{quant}\eta_{abs}\eta_{ext}\eta_{pertes}$$

où :

- $h\nu_1/h\nu_p$ est le rapport des énergies des photons du laser et de la pompe (rapport des longueurs d'onde de la pompe et du laser)
- $\eta_{quant}$ est l'efficacité quantique entre l'excitation d'un ion sur le niveau d'énergie supérieur correspondant à l'absorption d'un photon de pompe et la désexcitation de cet ion sur le niveau de départ de la transition laser (ce processus peut être altéré par des transitions avec des niveaux d'énergie parasites),
- $\eta_{abs}$ est l'efficacité d'absorption de la lumière de pompage, qui correspond à la quantité d'énergie de pompe absorbée globalement dans tout le milieu amplificateur,
- $\eta_{ext}$ est l'efficacité d'extraction liée au recouvrement entre les faisceaux de la pompe et du laser, qui correspond à la part d'énergie absorbée qui est réellement utilisée pour amplifier le faisceau laser,
- $\eta_{pertes}$ est un facteur lié aux pertes utiles et inutiles de la cavité laser.

Dans les microlasers connus de l'état de la technique, notamment dans la configuration plan-concave, c'est la valeur $\eta_{abs}$ qui est optimisée. Mais le microlaser selon l'invention prend en compte un facteur différent, le facteur $\eta_{ext}$. C'est ce qui permet d'optimiser le rendement énergétique du microlaser.

Dans tous les cas, les solutions proposées dans le cadre de la présente invention permettent de déterminer la taille d'une part du faisceau laser et d'autre part du faisceau de pompage de manière indépendante afin d'optimiser le recouvrement des deux faisceaux, et ainsi l'efficacité de pompage. On dispose en fait de 2 paramètres (par exemple les deux rayons de courbure dans le cas de miroirs d'entrée/sortie sphériques) pour faire varier la géométrie du microlaser.

Pour la réalisation de microlasers qui intégreraient à l'intérieur de leur cavité un élément supplémentaire, tel qu'un déclencheur électro-optique à basse tension de fonctionnement, ou une lame de renvoi du faisceau par réflexion totale pour un déclenchement par réflexion totale frustrée, ou un déclencheur acousto-optique compact, il est intéressant de contrôler la taille du faisceau au niveau de cet élément.

Deux faces courbes permettent aussi d'avoir un faisceau parallèle ou focalisé au niveau d'un élément de la cavité. Ceci est utile dans le cas du déclenchement par effet acousto-optique, dont le rendement de diffraction est optimal pour un faisceau parallèle.

Dans le cas d'un déclencheur électro-optique, un tel élément est connu en relation avec les microlasers d'après l'article de J.J. Zayhowski et al., intitulé "Diode-pumped microchip lasers electro-optically Q switched at high pulse repetition rates" dans Optics Letters, vol 17, n° 17, pp. 1201-1203, 1992. Mais ce type d'appareil fonctionne à une tension de plusieurs centaines de volt (pratiquement de l'ordre de 1000 V), du fait d'un écart interélectrodes de l'ordre de 1 mm. Avec un dispositif conforme à la présente invention, on obtient une diminution de la taille du faisceau à l'intérieur du milieu laser, ce qui permet d'utiliser une cellule électro-optique (par exemple en $LiTaO_3$) avec des électrodes rapprochées, auxquelles il suffit d'appliquer une tension de l'ordre de 100V. Le gain du point de vue du coût de l'appareil est très intéressant, puisqu'une électronique sophistiquée n'est alors plus nécessaire pour le déclenchement du milieu électro-optique.

La configuration du microlaser selon l'invention autorise la mise en forme du faisceau de pompe et simultanément du faisceau laser avec une grande plage de liberté. Ainsi, en définissant les rayons de courbure de chacune des faces terminales du microlaser de façon adéquate, ou, d'une façon plus générale, les caractéristiques des moyens de réflexion (miroirs de Fresnel, miroirs holographiques) en entrée et en sortie de cavité, on peut modifier chacun des deux faisceaux en fonction d'une caractéristique désirée du microlaser.

L'augmentation du recouvrement des deux faisceaux, conformément à l'invention permet en outre la diminution du seuil de fonctionnement laser et l'augmentation de l'efficacité d'absorption de la pompe, donc du rendement de conversion du microlaser.

Le microlaser selon l'invention reste compatible avec le principe de fabrication collective qui assure un coût faible au système laser. Cet aspect sera développé plus loin, en liaison avec la description d'un procédé de fabrication d'un microlaser selon l'invention.

La configuration d'un microlaser selon l'invention (c'est-à-dire satisfaisant à la condition de recouvrement) permet d'utiliser des cristaux aux propriétés laser moins bonnes du point de vue du rendement énergétique, mais qui présentent un intérêt spécial. Ainsi, des dispositifs laser à la mise en oeuvre difficile peuvent être réalisés dans une configuration géométrique conforme à l'invention. La configuration optimisée permet de diminuer la valeur du seuil de fonctionnement laser initialement élevée du fait des mauvaises propriétés du matériau laser. Ainsi, il est possible de faire fonctionner des microlasers d'épaisseur très faible (par exemple inférieure à 300μm ou 500μm), d'employer des matériaux à faible absorption pour la longueur d'onde de pompage, d'utiliser une source de pompage mal adaptée à l'absorption du matériau laser, ou d'utiliser des systèmes laser à trois niveaux d'énergie ou qui présentent de la réabsorption à la longueur d'onde laser.

Par exemple, les microlasers dopés au thulium (Tm) sont des composants qui présentent en cavité plan/plan des seuils élevés. Ces microlasers sont presque toujours réalisés en cavité plan/sphérique. Ils peuvent avantageusement fonctionner avec une cavité conforme à l'invention.

Comme autre exemple, si on dispose d'une diode de pompe d'une certaine puissance, et que cette puissance n'est pas suffisante pour atteindre le seuil de fonctionnement d'un microlaser, on peut utiliser une cavité optimisée au sens de l'invention (condition de recouvrement satisfaite) permettant de tirer le meilleur rendement possible du pompage et de faire fonctionner ce microlaser.

D'une façon générale, l'amélioration apportée à l'efficacité globale de pompage est de l'ordre de 2. Dans le cas particulier des lasers à 3 niveaux, non seulement le rendement différentiel du laser est doublé, mais le seuil de fonctionnement laser sera atteint avec deux fois moins de puissance. Ceci est d'autant plus important que ce seuil est très élevé avec un système à trois niveaux. Donc, la moitié de la puissance de pompe qui servait à atteindre le seuil sert maintenant à produire de l'énergie laser, et en plus avec un rendement double.

Un procédé de fabrication d'un microlaser conforme à l'invention va maintenant être décrit.

Les techniques de fabrication de microlasers font appel à des procédés planaires de microlithographie. Ils s'appliquent à de grandes quantités d'unités. Cette fabrication collective permet d'obtenir des microlasers à faible coût de production. Pour fabriquer des microlasers à deux micromiroirs sphériques ou deux miroirs de Fresnel ou deux miroirs holographiques, il faut conserver ce concept de fabrication à bas coût.

Le procédé décrit comporte les étapes suivantes, numérotées de 1 à 8.

1) - Choix du substrat et de la structure avec lesquels on veut fabriquer les microlasers. Les microlasers peuvent être réalisés en un seul bloc qu'il faudra donc graver sur deux faces. Ou bien les microlasers peuvent être réalisés en plusieurs blocs qui seront assemblés ensuite. Dans ce cas, une seule face est gravée sur les blocs terminaux des microlasers.

Les matériaux lasers utilisés sont très variés : verre phosphate, cristaux (YAG, LMA, YVO$_4$, YLF, SYS, CYS, SPF, CPF, CaSiO, ASN, ...) ; ils sont dopés avec différents ions (Nd, Er, Yb, Tm, Ho, Cr). Des matériaux stoechiométriques existent aussi, ils comprennent les ions actifs comme composants de la matrice (LNP, NdPP,...). Ceci permet de réaliser des microlasers émettant à diverses longueurs d'onde : 1µm (laser de puissance suffisante pour le marquage), 1,5 et 2 µm (longueur d'onde de sécurité oculaire, pour la télémétrie laser) par exemple. La silice peut aussi être utilisée pour réaliser un micromiroir. Des cristaux, électro-optiques, acousto-optiques peuvent également être rapportés dans le microlaser pour réaliser une modulation du laser (déclenchement du microlaser impulsionnel, modulation de fréquence pour détection de distance et de vitesse).

2) - la cavité du microlaser est calculée selon la méthode qui a été décrite ci-dessus. Pour des miroirs sphériques, le rayon de courbure des miroirs, le diamètre des miroirs, la longueur de la cavité de ces éléments sont déterminés. On calcule également les autres paramètres avec des méthodes habituelles (coefficients de réflexion, de transmission) . Les valeurs sont obtenues selon les applications et le dispositif envisagé pour la source microlaser.

3) - Le matériau laser se présente en général sous la forme d'un lingot qu'il faut découper en tranche. L'épaisseur de ces tranches correspond à la longueur du matériau dans la microcavité (typiquement de 100µm à 5mm). La dimension de la tranche (diamètre ou côté) doit être compatible avec les machines utilisées dans la suite du procédé, par exemple un diamètre de deux pouces. Ses tranches sont polies sur leurs deux faces.

4) - La cavité est fabriquée en usinant ses deux faces terminales selon les spécifications données par le calcul. cet usinage comporte plusieurs sous-étapes (numérotées 4.1 à 4.5 ci-dessous), étapes qui vont être détaillées. L'usinage peut être réalisé sur les deux faces du même matériau ou bien sur une face de deux matériaux qui seront assemblés ensuite.

Il est d'abord procédé à la réalisation du premier miroir.

4.1 - Il y a d'abord définition d'un masque permettant d'obtenir la forme de miroir désirée. Un masque à deux valeurs noir et blanc, ou un masque gris à densité variable peut être utilisé. Le masque est calculé et dessiné en fonction de l'ouverture, de la distance focale et de tous les paramètres désirés pour le micromiroir.

4.2 - Une résine correctement choisie est étendue à la tournette sur le substrat.

4.3 - Il est ensuite procédé à l'insolation de la résine au travers du masque (lumière UV).

4.4 - Il y a ensuite développement de la résine : il ne subsiste que des reliefs de résine dont la forme et la disposition correspondent à ce qui a été défini par le masque.

- Si le masque est un masque à densité variable, on a la forme de miroir désirée reproduite dans la couche de résine.
- Si le masque est un masque à deux valeurs, on a obtenu un relief en forme de plateaux isolés de même hauteur. Le substrat est alors porté à une certaine température, de sorte que les plots de résine commencent à fondre. La tension superficielle de la résine fondue donne au plot une forme quasi-sphérique. Cette forme durcit et se fige lorsque le substrat est refroidi.

4.5 - La forme de résine est transférée dans le substrat par gravure de la plaque. La méthode de gravure est adaptée en fonction du substrat (gravure ionique, gravure réactive, sèche, ...). La sélectivité de gravure entre la résine et le matériau du substrat permet de corriger la forme du relief de résine.

Pour la réalisation du second miroir, il est procédé de la même manière. Si l'usinage du second miroir se fait sur la même tranche que le premier miroir, le masque du second miroir doit être aligné avec le motif obtenu pour le premier miroir. Cet alignement de masques se fait dans la plupart des machines de masquage. Si le second miroir est réalisé sur un substrat différent de celui du premier miroir, l'alignement se fera lors de l'étape d'assemblage.

Les microlentilles ou micromiroirs peuvent être gravés directement dans le cristal laser ou en général dans les composants terminaux qui ferment la cavité laser. Si la gravure du matériau est trop difficile, il est toujours possible de rapporter sur le cristal laser ou sur le composant terminal le micromiroir, après que celui-ci ait été fabriqué sur un substrat qui admet la gravure (la silice par exemple).

Deux miroirs sphériques sont donc fabriqués pour le microlaser. Il vaut mieux que les miroirs soient alignés sur le même axe. Ceci simplifie le montage avec la source de pompage du microlaser, mais ce n'est pas nécessaire au fonctionnement du laser lui-même. Dans le cas où les microlentilles sont réalisées par gravure directe, cet alignement peut être réalisé efficacement lors des étapes de photolithographie en alignant les masques. Sinon, l'alignement sera réalisé au montage de la plaque de micromiroirs sur la plaque de matériau laser ou autre par une méthode optique. Dans ce cas, il faut prévoir des repères sur les plaques afin de les aligner entre elles au microscope par exemple.

5) - Les miroirs qui forment la cavité ayant la forme désirée, on dépose sous vide les traitements réfléchissants qui donneront aux faces des miroirs les coefficients de réflexion et de transmission voulus aux longueurs d'ondes de pompe et du laser.

6) - Les plaques sont assemblées si le microlaser est constitué de plusieurs éléments, par collage avec une colle optique ou par d'autres procédés. Il faut respecter l'alignement des éléments les uns par rapport aux autres si besoin, surtout pour ce qui concerne les deux micromiroirs.

7) - Enfin, la plaque obtenue passe à l'étape de découpage des puces lasers individuelles à l'aide d'une scie à fil ou d'une scie à lame diamantée. Les puces ont une dimension typique de 1x1 mm$^2$.

8) - Les puces lasers ou microlasers sont montées en bout de fibre optique, collée sur une diode laser nue ou encore montées dans une pièce mécanique. Le tout peut être encapsulé dans un boîtier hermétique. Les microlasers montés sont testés dans les conditions de pompage qui ont été déterminées à la conception.

Les étapes ci-dessus concernent la réalisation d'un microlaser selon l'invention, les moyens de réflexion définissant la cavité étant des micromiroirs sphériques.

Dans le cas où des éléments diffractifs (miroirs de Fresnel, miroirs holographiques) sont utilisés, les principales étapes (1-3, 6-8) sont encore valables. Les éléments diffractifs peuvent être réalisés selon un des procédés décrits dans l'article de C. LIEGOIS intitulé "Les optiques holographiques" paru dans "Opto" n°67, Mai-Juin 1992, pp. 28-34.

Les miroirs de Fresnel peuvent par exemple être réalisés par gravure directe d'une face plane terminale du microlaser, de façon analogue à la gravure des microlentilles.

Les composants holographiques peuvent être réalisés à l'aide de masques calculés par des codes existants (voir par exemple l'article de A. Bruel et al. intitulé "Calcul digital d'hologrammes" paru dans "Nouvelle Revue d'optique Appliquée", 1970, vol. 1, n°5, p.325-332), puis par :

- dépôt d'une couche, par exemple d'émulsion photosensible,
- écriture de l'hologramme (exposition),
- révélation de l'hologramme (de type photographique par exemple).

Les applications de ce nouveau microlaser optimisé sont au moins les mêmes que celles du microlaser existant. La liste suivante n'est pas exhaustive :

- injection dans des systèmes laser de puissance,
- détection d'espèces chimiques : gaz, polluants, ...,
- magnétométrie à hélium,
- télémétrie : détection d'obstacles pour l'automobile, télémètre portable, ...,
- microlidar,
- micromarquage de pièces industrielles.

Le champ d'application de ce microlaser optimisé est même rendu plus large grâce à la possibilité de réaliser des cavités utilisant des matériaux lasers de toutes sortes avec de meilleurs performances :

- laser à trois niveaux en général (système laser qui comporte de la réabsorption à la longueur d'onde laser), comme par exemple les lasers dopés erbium à sécurité oculaire,
- matériau laser à large bande d'émission qui présente en général une faible section efficace d'émission stimulée, mais qui peuvent permettre de fabriquer des sources accordables.

De même, la détermination complète de la géométrie du résonateur Fabry-Perot donne un certain contrôle sur la forme du faisceau laser, ce qui est un avantage appréciable pour de nombreuses applications comme la télémétrie ou le marquage industriel.

**Revendications**

1. Cavité microlaser comportant un milieu actif laser et les moyens de réflexion en entrée et en sortie de la cavité, caractérisée en ce que les moyens de réflexion sont dimensionnés de façon à ce que, dans le milieu actif, la taille d'un faisceau de pompage soit au plus égale à la taille d'un faisceau laser oscillant dans la cavité.

2. Cavité microlaser selon la revendication 1, les moyens de réflexion en entrée de cavité étant traités de façon à avoir un coefficient de transmission maximum à la longueur du faisceau de pompage et un coefficient de réflexion maximum à la longueur d'onde du faisceau laser.

3. Cavité microlaser selon l'une des revendications 1 ou 2, les moyens de réflexion en sortie de cavité étant traités de façon à avoir un coefficient de réflexion maximum à la longueur d'onde du faisceau de pompage.

4. Cavité microlaser selon l'une des revendications 1 à 3, les moyens de réflexion étant des miroirs sphériques.

5. Cavité microlaser selon l'une des revendications 1 à 3, les moyens de réflexion étant des miroirs de Fresnel.

6. Cavité microlaser selon l'une des revendications 1 à 3, les moyens de réflexion étant des miroirs holographiques.

7. Cavité microlaser selon l'une des revendications précédentes, comportant en outre un élément de déclenchement électro-optique à basse tension de fonctionnement.

8. Cavité microlaser selon l'une des revendications précédentes, le milieu actif laser étant un milieu à quatre niveaux.

9. Cavité microlaser selon l'une des revendications 1 à 7, le milieu actif laser étant un milieu à trois niveaux et les moyens de réflexion étant dimensionnés de façon à ce que la taille du faisceau de pompage soit sensiblement égale à la taille du faisceau laser dans le milieu actif.

10. Cavité microlaser selon l'une des revendications précédentes, le milieu actif laser ayant une épaisseur inférieure à 300 µm selon la direction du faisceau de pompage.

11. Microlaser comportant une cavité selon l'une des revendications précédentes et les moyens de pompage de cette cavité.

**Patentansprüche**

1. Mikrolaserkavität bzw. Mikrolaserresonator, ein laseraktives Material und die Reflexionseinrichtungen am Eingang und am Ausgang des Resonators umfassend,
   **dadurch gekennzeichnet**,
   daß die Reflexionseinrichtungen so dimensioniert sind, daß in dem aktiven Material die Größe eines Pumpstrahls höchstens gleich der Größe eines durch den Resonator abgestrahlten Laserstrahls ist.

2. Mikrolaserresonator nach Anspruch 1, dadurch gekennzeichnet, daß die Reflexionseinrichtungen am Resonatoreingang derart behandelt werden, daß sie bei der Wellenlänge des Pumpstrahls einen maximalen Transmissionskoeffizienten haben und bei der Wellenlänge des Laserstrahls einen maximalen Reflexionskoeffizienten.

3. Mikrolaserresonator nach einem der Ansprüche 1 oder 2, dadurch gekennzeichnet, daß die Reflexionseinrichtungen am Ausgang des Resonators derart behandelt werden, daß sie bei der Wellenlänge des Pumpstrahls einen maximalen Reflexionskoeffizienten haben.

4. Mikrolaserresonator nach einem der Ansprüche 1 bis 3, dadurch gekennzeichnet, daß die Reflexionseinrichtungen Kugelspiegel sind.

5. Mikrolaserresonator nach einem der Ansprüche 1 bis 3, dadurch gekennzeichnet, daß die Reflexionseinrichtungen Fresnelsche Spiegel sind bzw. ein Fresnelscher Doppelspiegel.

6. Mikrolaserresonator nach einem der Ansprüche 1 bis 3, dadurch gekennzeichnet, daß die Reflexionseinrichtungen holographische Spiegel sind.

7. Mikrolaserresonator nach einem der vorangehenden Ansprüche, außerdem ein elektrooptisches Auslösungselement mit niedriger Betriebsspannung umfassend.

8. Mikrolaserresonator nach einem der vorangehenden Ansprüche, wobei das laseraktive Material ein 4-Niveau-Material ist.

9. Mikrolaserresonator nach einem der Ansprüche 1 bis 7, dadurch gekennzeichnet, daß das laseraktive Material ein 3-Niveau-Material ist und die Reflexionseinrichtungen so dimensioniert sind, daß in dem laseraktiven Material die Größe des Pumpstrahls im wesentlichen gleich der Größe des Laserstrahls ist.

**10.** Mikrolaserresonator nach einem der vorangehenden Ansprüche, wobei das laseraktive Material entsprechend der Richtung des Pumpstrahls eine Dicke von weniger als 300μm hat.

**11.** Mikrolaser, einen Resonator nach einem der vorangehenden Ansprüche und die Pumpeinrichtungen dieses Resonators umfassend.

## Claims

**1.** Microlaser cavity having an active laser medium and reflection means at the entrance and exit of the cavity, characterized in that the reflection means are dimensioned in such a way that, in the active medium, the size of a pumping beam is at the most equal to the size of a laser beam emitted by the cavity.

**2.** Microlaser cavity according to claim 1, the reflection means at the cavity entrance being treated in such a way as to have a maximum transmission coefficient at the pumping wavelength and a maximum reflection coefficient at the laser beam wavelength.

**3.** Microlaser cavity according to one of the claims 1 or 2, the reflection means at the cavity exit being treated so as to have a maximum reflection coefficient at the pumping beam wavelength.

**4.** Microlaser cavity according to one of the claims 1 to 3, the reflection means being spherical mirrors.

**5.** Microlaser cavity according to one of the claims 1 to 3, the reflection means being Fresnel mirrors.

**6.** Microlaser cavity according to one of the claims 1 to 3, the reflection means being holographic mirrors.

**7.** Microlaser cavity according to one of the preceding claims, also having an electro-optical release element with a low operating voltage.

**8.** Microlaser cavity according to one of the preceding claims, the active laser medium being a four level medium.

**9.** Microlaser cavity according to one of the claims 1 to 7, the active laser medium being a three level medium and the reflection means being dimensioned in such a way that the size of the pumping beam is substantially equal to the size of the laser beam in the active medium.

**10.** Microlaser cavity according to one of the preceding claims, the active laser medium having a thickness below 300 μm in the direction of the pumping beam.

**11.** Microlaser having a cavity according to one of the preceding claims and means for pumping said cavity.

FIG. 1

FIG. 2

FIG. 3

FIG. 5

FIG. 4 A

FIG. 4 B

FIG. 4 C

FIG. 4 D

FIG. 6 A

FIG. 6 B

FIG. 6 C

FIG. 6 D

FIG. 7

FIG. 8 A

FIG. 8 B